# EUROPEAN PATENT SPECIFICATION

(11) **EP 4 576 313 B1**
(45) Date of publication and mention of the grant of the patent: **27.05.2026**
(21) Application number: 23218671.8
(22) Date of filing: 20.12.2023
(51) Int. Cl.: H01M 10/42, B60L 58/24, H01M 10/48, H01M 10/625, H01M 10/633

(54) **HANDLING WAKE UP OF A BATTERY ARRANGEMENT**
HANDHABUNG DES AUFWACHENS EINER BATTERIEANORDNUNG
GESTION DE RÉVEIL D'UN AGENCEMENT DE BATTERIE

(43) Date of publication of application: 25.06.2025
(73) Proprietor: VOLVO TRUCK CORPORATION, 405 08 Göteborg (SE)
(72) Inventor: Brunet, Simon, 438 33 Landvetter (SE)
(74) Representative: Valea AB

(56) References cited:
- WO-A1-2022/266912
- CN-A- 110 281 864
- US-A1- 2022 111 732

## Description

### TECHNICAL FIELD

The disclosure relates generally to battery management. In particular aspects, the disclosure relates to handing a wake up of a battery arrangement . The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure also apply to stationary batteries such as for any industrial purpose

### BACKGROUND

As a battery changes temperature to very high or very low temperatures, it may lose quality or efficiency, or even get damaged. This may typically happen for a battery of a parked vehicle, where the vehicle is parked in an area where the temperature may drop or increase rapidly, e.g., in cold or hot climate regions. To mitigate this, it may be possible to periodically check and manage thermal management functions which adjusts surrounding temperature of the battery. However, such functions require a large part of a battery management system to be constantly active which wastes energy. Prior art documents WO 2022/266912 and CN 110 281 864 disclose a vehicle management systems.

A more energy-efficient manner of handling a battery arrangement is therefore needed.

### SUMMARY

According to a first aspect of the disclosure, a computer system comprising processing circuitry configured to handle a battery arrangement is provided. The battery arrangement comprises a first battery cell and a cell monitoring unit. The cell monitoring unit is configured to monitor the first battery cell.

The processing circuitry is configured to obtain by the cell monitoring unit, a first indication indicative of an estimated or measured temperature of the first battery cell.

The processing circuitry is configured to, based on the estimated or measured temperature of the first battery cell in relation to a preferred temperature range of the first battery cell, determine whether or not to transmit a first wake up signal to a battery control module.

The first wake up signal is arranged to indicate to the battery control module to trigger a thermal management function for the battery arrangement. Hence, in response to receiving the wake up signal, the battery control module may trigger the thermal management function.

The first aspect of the disclosure may seek to improve the energy efficiency of the battery arrangement while not risk damaging the battery arrangement.

A technical benefit may include improved energy efficiency. This is since it is determined based on the temperature whether or not to transmit a first wake up signal to a battery control module. This means that only minimal circuits like the cell monitoring unit needs to be powered on to perform the method, and if the temperature is deemed acceptable, there is no need to wake up the battery control module to perform the thermal management function, thereby saving energy.

Optionally in some examples, including in at least one preferred example, the processing circuitry is further configured to determine to transmit the first wake up signal in response to that the estimated or measured temperature of the first battery cell is outside of the preferred temperature range.

A technical benefit may include improved energy efficiency. This is since the need to transmit the first wake up signal, and thereby to consume energy, is reduced while still keeping the first battery cell within the preferred temperature range.

The processing circuitry is further configured to determine whether or not to transmit the first wake up signal to the battery control module based on at least one constraint limiting a number of wake up signals and/or a rate of wake up signals sent to the battery control module. A rate of the wake up signals may mean a frequency of the wake up signals over a set time period.

A technical benefit may include improved energy efficiency. This is since the need to transmit the first wake up signal is reduced based on the at least one constraint, while still keeping the first battery cell within the preferred temperature range.

Optionally in some examples, including in at least one preferred example, the at least one constraint comprises a hysteresis for an end-point of the preferred temperature range. In these examples, the processing circuit is configured to determine whether or not to transmit the first wake up signal based on whether the measured or estimated temperature triggers the hysteresis with respect to at least one previously measured or estimated temperature of the first battery cell.

A technical benefit may include improved energy efficiency. This is since the need to transmit the first wake up signal is reduced due to the hysteresis, as it only will be transmitted if it triggers the hysteresis, i.e., if it is not related to measurements or estimations within an error margin around the end-point of the preferred temperature range.

Optionally in some examples, including in at least one preferred example, the at least one constraint comprises a constraint to only transmit a set number of wake up signals during a first time period.

A technical benefit may include improved energy efficiency. This is since the need to transmit the first wake up signal is reduced due to limiting the number of wake up signals during the first time period, while still keeping the first battery cell within the preferred temperature range.

Optionally in some examples, including in at least one preferred example, the first time period starts when transmitting a wake up signal to the battery control module.

A technical benefit may include improved energy efficiency, since the set number of wake up signals is constrained subsequent to transmitting a wake up signal, i.e., during the time when it is not needed to transmit any further wake up signals, unless some redundant signals are permitted to ensure the thermal management function.

Optionally in some examples, including in at least one preferred example, the at least one constraint comprises a constraint to wait at least a second time period until transmitting a subsequent wake up signal.

A technical benefit may include improved energy efficiency, this is since the thermal management function triggered by the first wake up signal will keep the first battery cell within the preferred temperature range at least until the second time period expires and accounting for an error margin.

Optionally in some examples, including in at least one preferred example, the processing circuitry is configured to obtain the first indication by being configured to:
- obtain a temperature measurement or estimate from one or more second battery cells, and
- estimate the temperature of the first battery cell based on the temperature measurement or estimate from one or more second battery cells.

A technical benefit may include improved efficiency of managing batteries. This is since the temperature of the first battery cell can be estimated even if there are no explicit measurements of the temperature of the first battery cell. Consequently, it is possible to maintain the temperature of the first battery cell within the preferred temperature range and thereby reduce any risks of damaging the first battery cell.

Optionally in some examples, including in at least one preferred example, the processing circuitry is further configured to transmit the first wake up signal, and thereby indicating to the battery control module to trigger the thermal management function.

A technical benefit may include improved efficiency of managing batteries. This is since the temperature of the first battery cell can be maintained in a range which does not risk damaging the first battery cell.

Optionally in some examples, including in at least one preferred example, the thermal management function relates to initiating, adjusting, and/or maintaining a heating or cooling functionality for adjusting the temperature of the first battery cell to meet the preferred temperature range.

A technical benefit may include improved energy efficiency. This is since when the thermal management function is triggered it can flexibly adjust the temperature such that the first battery cell reaches an optimal temperature or at least to be within the preferred temperature range, e.g., by initiating and/or adjusting heating or cooling relating to the battery arrangement.

Optionally in some examples, including in at least one preferred example, the processing circuitry is further configured to, subsequent to transmitting the first wake up signal to the battery control module, obtain by the cell monitoring unit, a second indication indicative of a second estimated or measured temperature of the first battery cell. In these examples, when the second estimated or measured temperature is outside of the preferred temperature range, determine whether or not to transmit a second wake up signal to the battery control module based on at least one constraint limiting a number of wake up signals and/or a rate of wake up signals sent to the battery control module.

A technical benefit may include improved energy efficiency. This is since the battery arrangement can be kept within the preferred temperature range over time.

According to a second aspect of the disclosure, a vehicle comprising a battery arrangement is provided. The battery arrangement comprises a first battery cell, a cell monitoring unit, and a battery control module. The cell monitoring unit is configured to monitor the first battery cell. The battery control module is configured to trigger a thermal management function for the battery arrangement when receiving a wake up signal. The vehicle comprises the computer system according to the first aspect.

Optionally in some examples, including in at least one preferred example, the vehicle is parked and is arranged in a low power mode.

A technical benefit may include a reduced energy consumption.

According to a third aspect of the disclosure, a computer-implemented method for handling a battery arrangement is provided. The battery arrangement comprises a first battery cell and a cell monitoring unit. The cell monitoring unit is configured to monitor the first battery cell.

The method comprises, by processing circuitry of a computer system, obtaining by the cell monitoring unit, a first indication indicative of an estimated or measured temperature of the first battery cell.

The method comprises, by the processing circuitry, based on the estimated or measured temperature of the first battery cell in relation to a preferred temperature range, determining whether or not to transmit a first wake up signal to a battery control module, which first wake up signal is arranged to indicate to the battery control module to trigger a thermal management function for the battery arrangement.

In the present invention, including in at least one preferred example, determining whether or not to transmit the first wake up signal is based on at least one constraint limiting number of wake up signals and/or a rate of wake up signals sent to the battery control module.

Optionally in some examples, including in at least one preferred example, obtaining the first indication comprises:
- obtaining a temperature measurement or estimate from one or more second battery cells, and
- estimating the temperature of the first battery cell based on the temperature measurement or estimate from one or more second battery cells.

Optionally in some examples, including in at least one preferred example, the method comprises, by the processing circuitry, transmitting the first wake up signal to the battery control module, and thereby indicating to the battery control module to trigger the thermal management function.

Optionally in some examples, including in at least one preferred example, the method comprises, by the processing circuitry, subsequent to transmitting the first wake up signal to the battery control module, obtaining by the cell monitoring unit, a second indication indicative of a second estimated or measured temperature of the first battery cell, and when the second estimated or measured temperature is outside of the preferred temperature range, determining whether or not to transmit a second wake up signal to the battery control module based on at least one constraint limiting a number of wake up signals and/or a rate of wake up signals sent to the battery control module.

The technical benefits of the second and third aspects of the disclosure correspond to the technical benefits of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a battery arrangement according to an example.
**FIG. 2** illustrates a flow chart of a method according to an example.
**FIG. 3** illustrates a line diagram according to an example scenario.
**FIG. 4** is another view of **FIG. 1****,** according to an example.
**FIG. 5** is a flow chart of a method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

When batteries get too warm or too cold, they may get damaged and thereby lose quality which reduce their efficiency. Hence, it may be needed to actively use cooling or heating to keep them cool or warm depending on what is needed. However, doing this continuously uses a lot of energy which also wears the batteries.

To resolve this, examples herein provide a middle ground which improves the energy efficiency in use of batteries as they can remain within a preferred temperature range but also not spend too much energy to keep them warm or cool.

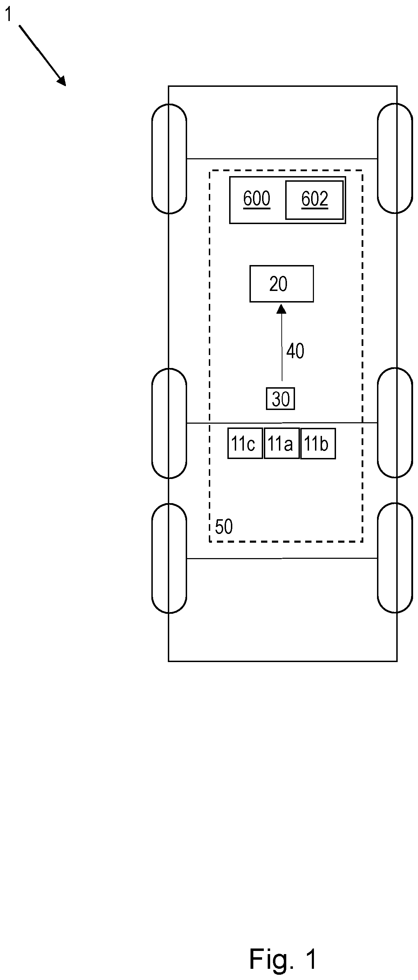

**FIG. 1** illustrates a **battery arrangement 50** according to an example. In FIG. 1, the battery arrangement 50 is illustrated as part of a **vehicle 1,** however, while examples herein focus on vehicle applications where the battery arrangement 50 is comprised in the vehicle 1, the battery arrangement 50 may also be a standalone battery arrangement 50 for use in any industrial or home use.

The battery arrangement 50 comprises one or more battery cells, including **a first battery cell 11a.** The one or more battery cells may comprise just a few battery cells, or up to hundreds of battery cells.

The first battery cell 11a may be any type of battery cell, e.g., cylindrical or prismatic cells. The first battery cell 11a may be a lithium-ion cell.

The first battery cell 11a may be arranged adjacent and/or within a set distance to **one or more second battery cells 11b, 11c.**

The battery arrangement 50 comprises a cell monitoring unit 30. The cell monitoring unit may be a Cell Supervision Circuit (CSC).

The cell monitoring unit 30 is configured to monitor the first battery cell 11a and/or the one or more second battery cells 11b, 11c. As an example, the cell monitoring unit 30 may be configured to monitor a temperature of the first battery cell 11a, e.g., by measuring the temperature of the first battery cell 11a and/or the one or more second battery cells 11b, 11c an estimating the temperature of the first battery cell 11a. The cell monitoring unit 30 may also be monitoring pressure and/or voltage of the first battery cell 11a. The cell monitoring unit 30 may be always turned on, and continuously and/or periodically performing its monitoring.

When the cell monitoring unit 30 monitors a temperature outside a preferred temperature range, e.g., at most 10C above a target temperature and at most 5C below the target temperature, examples herein may involve transmitting **wake up signals 40** to a **battery control module 20.**

The battery control module 20 may be comprised in the battery arrangement 50 or separate from the battery arrangement 50. The battery control module 20 may be comprised in the vehicle 1. As an example, the battery control module 20 may be a Traction Battery Control Module (TBCM). The battery control module 20 may be, or may be comprised in, a Battery Management Unit (BMU). The battery control module 20 may be turned off, or may be in a low-power mode, e.g., associated with the vehicle 1 being parked, only to be awoken into an active state based on receiving and/or detecting a wake up signal 40 transmitted to the battery control module 20, such as in response to receiving such a signal 40.

When receiving and/or detecting a wake up signal 40, the battery control module 20 may be configured to initiate, adjust, or maintain a thermal management function.

For example, the battery control module 20 may obtain the temperature of the first battery cell 11a, e.g., by use of the cell monitoring unit 30 or as indicated in a wake up signal.

The battery control module 20 may indicate the temperature to a vehicle 1 Electronic Control Unit (ECU) (not shown), e.g., which may control the thermal management function. Typically this involves transmitting a Controller Area Network (CAN) message and/or via a Serial Peripheral Interface (SPI) interface, e.g., which may temporarily wake up the vehicle 1 ECU to perform the thermal management function, e.g., for controlling coolant pumps and/or activating a heater or cooler of the vehicle 1 or the battery arrangement 50. Usually SPI is used within the BMU for communication between micro-controller and other elements. CAN may typically be used for longer distance communication, like between the BMU and other vehicle units of the vehicle 1.

The thermal management function may relate to a heating and/or cooling functionality for heating or cooling the battery arrangement 50 such as the first battery cell 11a to meet the preferred temperature range.

The thermal management function may, when triggered by receipt or detection of a wake up signal 40, be activated for a set time period such that it adjusts the temperature of the battery arrangement 50, such as of the first battery cell 11a, to be within the preferred temperature range.

In some example herein , the vehicle 1 is parked and/or is arranged, e.g., configured, in a low power mode, e.g., the vehicle 1 is turned off.

In other words, the cell monitoring unit 30 may be the only active unit in the battery arrangement 50 and/or the vehicle 1, where other components of the vehicle 1 and/or the battery arrangement 50 are idle, or in a low power mode, when not receiving or detecting a wake up signal 40.

The cell monitoring unit 30 may be powered by the batteries in the battery arrangement 50, such as from the first battery cell 11a.

Examples herein may be performed by **a computer system 600** and/or a **processing circuitry 602** therein. These may use processor, but may also be any suitable electronic circuitry, e.g., as part of the cell monitoring unit 30.

The computer system 600 and/or the processing circuitry 602 therein may be part of the cell monitoring unit 30. In other words, all examples herein may be performed by the cell monitoring unit 30. In other words, the computer system 600 and/or the processing circuitry 602 may or may not be part of the battery arrangement 50.

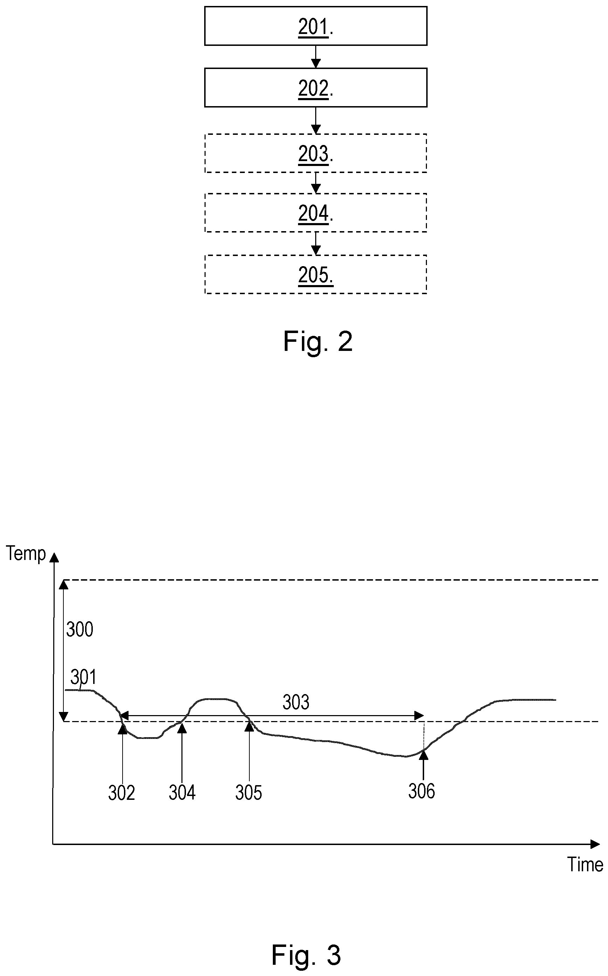

**FIG. 2** illustrates a flow chart of a method for handling a battery arrangement 50 comprising the first battery cell 11a and the cell monitoring unit 30. The cell monitoring unit 30 is configured to monitor the first battery cell 11a.

The method may be a computer-implemented method performed by the computer system 600 and/or the processing circuitry 602 therein, and/or by the cell monitoring unit 30.

The method comprises the following actions, which may be performed in any suitable order. In FIG. 2, dashed boxes indicates optional actions.

### Action 201

The method comprises obtaining, by the cell monitoring unit 30, a first indication indicative of an estimated or measured temperature of the first battery cell 11a.

In other words, the cell monitoring unit 30 may have some temperature sensor for measuring the temperature, or may use any suitable technique for obtaining said temperature.

In some examples, obtaining the first indication comprises obtaining a temperature measurement or estimate from one or more second battery cells 11b, 11c, and estimating the temperature of the first battery cell 11a based on the temperature measurement or estimate from one or more second battery cells 11b, 11c. For example, the estimation may be based on a predefined temperature model, or the temperature may be assumed to be the same as the temperature of any one of the one or more second battery cells 11b, 11c.

### Action 202

The method comprises determining based on the estimated or measured temperature of the first battery cell 11a in relation to a preferred temperature range, whether or not to transmit a **first wake up signal** to a battery control module 20.

The first wake up signal is arranged to indicate to the battery control module 20 to trigger a thermal management function for the battery arrangement 50.

The first wake up signal may be a wake up signal 40 as discussed in FIG. 1.

When the battery control module 20 has triggered the thermal management function, it may again be configured in an idle mode or in a low power mode, awaiting further wake up signals to again trigger the thermal management function, when needed.

The thermal management function relates to initiating, adjusting, and/or maintaining a heating or cooling functionality for adjusting the temperature of the first battery cell 11a to meet the preferred temperature range.

Typically, if the temperature of the first battery cell 11a is within the preferred temperature range, or if one or more previous wake up signals have recently been transmitted to the battery control module 20, it may be determined not to send the first wake up signal and thereby save energy otherwise used for transmitting the first wake up signal, and for waking up the battery control module 20.

If the temperature is outside of the temperature range, and wake up signals have not been sent recently, it may be determined to send the first wake up signal and thereby ensure that the thermal management function is triggered to make the first battery cell 11a meet the preferred temperature range.

The temperature range may comprise one or two thresholds, such as a high and/or a low threshold, wherein, if not met, i.e., if the temperature is higher than the high threshold or lower than the low threshold, the temperature is considered to be outside of the preferred temperature range.

In other words, in some examples, determining to transmit the first wake up signal may be performed in response to that the estimated or measured temperature of the first battery cell 11a is outside of the preferred temperature range.

In the present invention, determining whether or not to transmit the first wake up signal is based on at least one constraint limiting a number of wake up signals and/or a rate of wake up signals sent to the battery control module 20. A rate of the wake up signals may be a number of wake up signals transmitted over a set time period. A rate of the wake up signals may also refer to a frequency of transmitted wake up signals over a set time period.

In this way, it is ensured that wake up signals are not excessively sent to the battery control module 20, and thereby energy is saved.

In some examples, the at least one constraint comprises a hysteresis for an end-point of the preferred temperature range. In these examples, determining whether or not to transmit the first wake up signal may be based on whether the measured or estimated temperature triggers the hysteresis with respect to at least one previously measured or estimated temperature of the first battery cell 11a.

A hysteresis as used herein may refer to a function ensuring that if the end-point has been exceeded and then the temperature has returned to the preferred temperature range, then the temperature range may be extended by a hysteresis margin, within a set time period. Additionally or alternatively, a hysteresis as used herein may refer to a function ensuring that a change in temperature is significant in that it is sufficiently larger than previously measured temperatures and/or that the temperature remains for a set period of time.

In other words, the hysteresis may be a function ensuring that a change in temperature between the estimated or measured temperature and one or more previously estimated or measured temperatures is sufficiently large, or that the estimated or measured temperature is outside of the preferred temperature range for a set amount of time, or that the temperature is not just oscillating around an end-point of the temperature range, before being able to again trigger a wake up signal to be transmitted.

As one example, the hysteresis may require that, if a wake up signal was transmitted within a set time period, e.g., 30 minutes, the estimated or measured temperature may need to differ from the end-point of the preferred temperature range by a set threshold before being able to again trigger a wake up signal to be transmitted.

In some examples, the at least one constraint comprises a constraint to only transmit a set number of wake up signals during a first time period, e.g., at most two or three wake up signals per hour.

In some examples, the first time period starts when transmitting a wake up signal to the battery control module 20.

In some examples, the at least one constraint comprises a constraint to wait at least a second time period until transmitting a subsequent wake up signal, e.g., wait at least 20 minutes.

The at least one constraint may be tuned based on an application, target climate, etc.

### Action 203

The method may further comprise, e.g., in response to determining to transmit the first wake up signal to a battery control module 20, transmitting the first wake up signal to the battery control module 20, and thereby at least implicitly indicating to the battery control module 20 to trigger the thermal management function. As an example, when receiving the wake up signal, the battery control module 20 is configured to wake up, and may be configured to obtain a temperature of the first battery cell 11a and further configured to determine that triggering thermal management function is necessary.

Thereby if the first battery cell 11a is too cool, it will be heated to be within the preferred temperature range, and if the first battery cell 11a is too warm, it will be cooled, to be within the preferred temperature range.

### Action 204

The method may further comprise, subsequent to transmitting the first wake up signal to the battery control module 20, obtaining, by the cell monitoring unit 30, a second indication indicative of a second estimated or measured temperature of the first battery cell 11a.

Action 204 may be an iteration of action 201, and may be repeated any number of times.

### Action 205

The method may further comprise, e.g., similar to action 202, when the second estimated or measured temperature is outside of the preferred temperature range, determining whether or not to transmit a **second wake up signal** to the battery control module 20 based on at least one constraint limiting a number of wake up signals and/or a rate of wake up signals sent to the battery control module 20.

The second wake up signal may be a wake up signal 40 as discussed above with reference to FIG. 1.

Determining whether or not to transmit the second wake up signal may be based on when the first wake up signal was transmitted, and may be based on how a temperature has changed as indicated in the first indication and as indicated in the second indication. If there has been an improvement, i.e., with respect to the preferred temperature range, the second wake up signal may be deferred for at least a predetermined period of time, and/or actions 204-205 may be iterated after said period of time.

Action 205 may be an iteration of action 202, and may be repeated any number of times.

**FIG. 3** illustrates an example scenario of the battery arrangement 50 according to examples herein.

A temperature over time of the first battery cell 11a is illustrated in FIG. 3, e.g., the temperature obtained in the first indication of action 201. This is illustrated by a **temperature curve 301.**

In the example scenario of FIG. 3., the preferred temperature range is illustrated as **temperature range 300.**

At a **first point in time 302,** the temperature curve 301 goes from being within the temperature range 300 to being outside of the temperature range 300, and a wake up signal may be transmitted to the battery control module 20, e.g., as in action 203, and subsequently, the processing circuitry 602 and/or the cell monitoring unit 30 may be constrained to not send any further wake up signals for at least a **time period 303,** e.g., the second time period as in action 202.

At a **second point in time 304,** the temperature curve 301, is heated to be within the temperature range 300. The battery control module 20 may be put into a low power mode for saving energy.

As an alternative, the time period 303 may start from the second point in time 304 instead of the first point in time 302.

At a **third point in time 305,** the temperature curve 301 again falls outside of the temperature range 300. However, due to the constraint of the time period 303, no further wake up signal may be sent until the time period 303 expires. This is to avoid sending too many wake up signals if the temperature oscillates around the end-point of the temperature range 300. The temperature range 300 may be set conservatively, e.g., such that falling outside the interval for a set time or for a set temperature difference may not be damaging for the battery arrangement 50.

At a **fourth point in time 306,** the temperature curve 301 is outside of the temperature range 300 and the time period 303 has expired, thereby it may be determined to send a wake up signal, e.g., as in action 203.

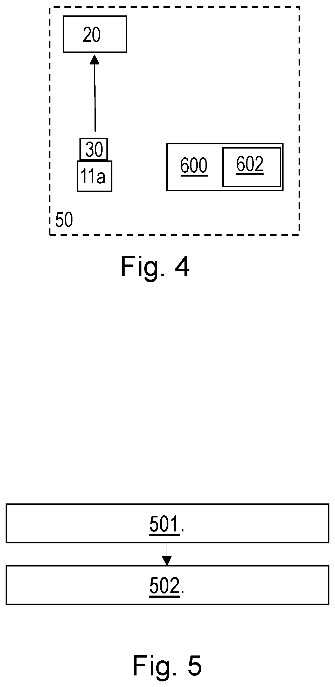

**FIG. 4** is another view of the battery arrangement 50 and computer system 600 of **FIG. 1****,** according to an example.

FIG. 4 illustrates the computer system 600 comprising the processing circuitry 602 configured to handle the battery arrangement 50 comprising the first battery cell 11a and the cell monitoring unit 30. The battery arrangement 50 may or may not comprise the computer system 600 and/or the processing circuitry 602 therein.

The cell monitoring unit 30 is configured to monitor the first battery cell 11a.

The processing circuitry 602 is configured to obtain by the cell monitoring unit 30, a first indication indicative of an estimated or measured temperature of the first battery cell 11a.

The processing circuitry 602 is configured to, based on the estimated or measured temperature of the first battery cell 11a in relation to a preferred temperature range of the first battery cell 11a, determine whether or not to transmit a first wake up signal to the battery control module 20. The battery arrangement 50 may or may not comprise the battery control module 20.

The first wake up signal is arranged to indicate to the battery control module 20 to trigger a thermal management function for the battery arrangement 50.

**FIG. 5** is a flow chart of a computer-implemented method for handling a battery arrangement 50 comprising the first battery cell 11a and the cell monitoring unit 30 according to an example. The cell monitoring unit 30 is configured to monitor the first battery cell 11a.

The method comprises the following actions which may be combined with any of the above actions and examples in any suitable manner and order.

### Action 501

The method comprises, by the processing circuitry 602 of the computer system 600, obtaining by the cell monitoring unit 30, a first indication indicative of an estimated or measured temperature of the first battery cell 11a.

### Action 502

The method comprises, by the processing circuitry 602, based on the estimated or measured temperature of the first battery cell 11a in relation to a preferred temperature range, determining whether or not to transmit a first wake up signal to a battery control module 20.

The first wake up signal is arranged to indicate to the battery control module 20 to trigger a thermal management function for the battery arrangement 50.

### Further variations and examples and information

Examples herein may relate to moving from a periodical wake up to an on-event based wake up to preserve energy. The CSC, i.e., the cell monitoring unit 30, may always be on, e.g., as comprised inside the battery arrangement 50 to monitor e.g., voltages and/or pressure, as well as temperature of the battery arrangement 50.

This CSC may inform the main battery unit, or the TBCM, i.e., the battery control module 20, that the battery temperature, i.e., the temperature of the first battery cell 11a, is high or low, which would trigger the TBCM to wake up the vehicle 1 and request thermal management, e.g., as in action 203.

A temperature monitoring circuit inside the CSC may be configured to detect a temperature above/below a threshold with a hysteresis function, e.g., as part of action 202.

The output of this circuit triggering a waking-up of the TBCM (Traction Battery Control Module) via SPI or equivalent interface, e.g., as part of action 203.

The TBCM may send a CAN message to a vehicle node of the vehicle 1, responsible for thermal management to wake-up that node, e.g., as part of action 203.

The thermal management node may start the thermal management function, e.g., , e.g., triggered by action 203.

An alternative is that the TBCM has a logic function to prevent excessive wake-up of the vehicle, e.g., may be max wake-up request per hour for example, e.g., as in action 202.

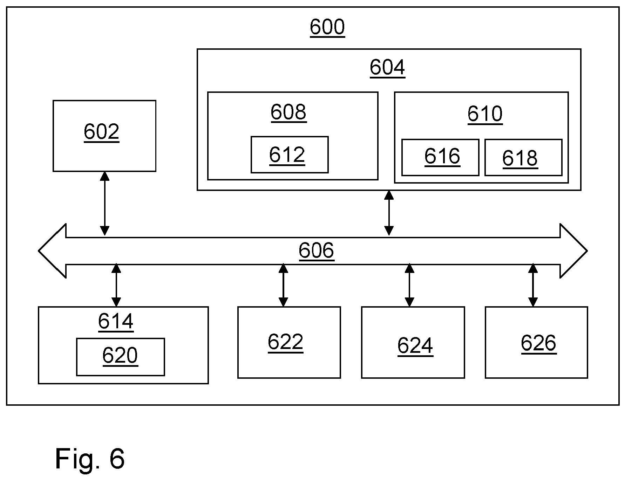

**FIG. 6** is a schematic diagram of the computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include the processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) 612 may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

As alternatives or additions to above, below follows a series of Examples as follows below.

Example 1. A computer system 600 comprising processing circuitry 602 configured to handle a battery arrangement 50 comprising a first battery cell 11a and a cell monitoring unit 30, the cell monitoring unit 30 is configured to monitor the first battery cell 11a, the processing circuitry 602 is further configured to:
- obtain by the cell monitoring unit 30, a first indication indicative of an estimated or measured temperature of the first battery cell 11a,
- based on the estimated or measured temperature of the first battery cell 11a in relation to a preferred temperature range of the first battery cell 11a, determine whether or not to transmit a first wake up signal to a battery control module 20, which first wake up signal is arranged to indicate to the battery control module 20 to trigger a thermal management function for the battery arrangement 50.

Example 2. The computer system 600 of Example 1, wherein the processing circuitry 602 is further configured to determine to transmit the first wake up signal in response to that the estimated or measured temperature of the first battery cell 11a is outside of the preferred temperature range.

Example 3. The computer system 600 of Example 1 or 2, wherein the processing circuitry 602 is further configured to determine whether or not to transmit the first wake up signal to the battery control module 20 based on at least one constraint limiting a number of wake up signals and/or a rate of wake up signals sent to the battery control module 20.

Example 4. The computer system 600 of Example 3, wherein the at least one constraint comprises a hysteresis for an end-point of the preferred temperature range, and wherein the processing circuit is configured to determine whether or not to transmit the first wake up signal based on whether the measured or estimated temperature triggers the hysteresis with respect to at least one previously measured or estimated temperature of the first battery cell 11a.

Example 5. The computer system 600 of any of Examples 2-4, wherein the at least one constraint comprises a constraint to only transmit a set number of wake up signals during a first time period.

Example 6. The computer system 600 of any of Examples 2-5, wherein the first time period starts when transmitting a wake up signal to the battery control module 20.

Example 7. The computer system 600 of any of Examples 2-6, wherein the at least one constraint comprises a constraint to wait at least a second time period until transmitting a subsequent wake up signal.

Example 8. The computer system 600 of any of Examples 1-7, wherein the processing circuitry 602 is configured to obtain the first indication by being configured to:
- obtain a temperature measurement or estimate from one or more second battery cells 11b, 11c, and
- estimate the temperature of the first battery cell 11a based on the temperature measurement or estimate from one or more second battery cells 11b, 11c .

Example 9. The computer system 600 of any of Examples 1-8, wherein the processing circuitry 602 is further configured to:
- transmit the first wake up signal, and thereby indicating to the battery control module 20 to trigger the thermal management function

Example 10. The computer system 600 of Example 9, wherein the thermal management function relates to initiating, adjusting, and/or maintaining a heating or cooling functionality for adjusting the temperature of the first battery cell 11a to meet the preferred temperature range.

Example 11. The computer system 600 of Example 9 or 10, wherein the processing circuitry 602 is further configured to:
- subsequent to transmitting the first wake up signal to the battery control module 20,
- obtain by the cell monitoring unit 30, a second indication indicative of a second estimated or measured temperature of the first battery cell 11a, and when the second estimated or measured temperature is outside of the preferred temperature range, determine whether or not to transmit a second wake up signal to the battery control module 20 based on at least one constraint limiting a number of wake up signals and/or a rate of wake up signals sent to the battery control module 20.

Example 12. A vehicle 1 comprising a battery arrangement 50 comprising a first battery cell 11a and a cell monitoring unit 30, and a battery control module 20, the cell monitoring unit 30 is configured to monitor the first battery cell 11a, the battery control module 20 is configured to trigger a thermal management function for the battery arrangement 50 when receiving a wake up signal, and wherein the vehicle 1 comprises the computer system 600 of any of Examples 1-11.

Example 13. A vehicle 1 of Example 12, wherein the vehicle is parked and is configured in a low power mode .

Example 14. A computer-implemented method for handling a battery arrangement 50 comprising a first battery cell 11a and a cell monitoring unit 30, the cell monitoring unit 30 is configured to monitor the first battery cell 11a, the method comprising:
- by processing circuitry 602 of a computer system 600, obtaining 201, 501 by the cell monitoring unit 30, a first indication indicative of an estimated or measured temperature of the first battery cell 11a,
- by the processing circuitry 602, based on the estimated or measured temperature of the first battery cell 11a in relation to a preferred temperature range, determining 202, 502 whether or not to transmit a first wake up signal to a battery control module 20, which first wake up signal is arranged to indicate to the battery control module 20 to trigger a thermal management function for the battery arrangement 50.

Example 15. The method of Example 14, wherein determining 202 whether or not to transmit the first wake up signal is based on at least one constraint limiting a number of wake up signals and/or a rate of wake up signals sent to the battery control module 20.

Example 16. The method of any of Examples 14-15, wherein obtaining 201 the first indication comprises:
- obtaining a temperature measurement or estimate from one or more second battery cells 11b, 11c, and
- estimating the temperature of the first battery cell 11a based on the temperature measurement or estimate from one or more second battery cells 11b, 11c .

Example 17. The method of any of Examples 14-16, further comprising:
- by the processing circuitry 602, transmitting 203 the first wake up signal to the battery control module, and thereby indicating to the battery control module 20 to trigger the thermal management function.

Example 18. The method of Example 17, further comprising:
- by the processing circuitry 602, subsequent to transmitting the first wake up signal to the battery control module 20, obtaining 204 by the cell monitoring unit 30, a second indication indicative of a second estimated or measured temperature of the first battery cell 11a, and when the second estimated or measured temperature is outside of the preferred temperature range, determining 205 whether or not to transmit a second wake up signal to the battery control module 20 based on at least one constraint limiting a number of wake up signals and/or a rate of wake up signals sent to the battery control module 20.

Example 19. A computer program product comprising program code for performing, when executed by the processing circuitry 602, the method of any of Examples 14-18.

Example 20. A non-transitory computer-readable storage medium comprising instructions, which when executed by the processing circuitry 602, cause the processing circuitry 602 to perform the method of any of Examples 14-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to handle a battery arrangement (50) comprising a first battery cell (11a) and a cell monitoring unit (30), the cell monitoring unit (30) is configured to monitor the first battery cell (11a), the processing circuitry (602) is further configured to:
obtain by the cell monitoring unit (30), a first indication indicative of an estimated or measured temperature of the first battery cell (11a),
based on the estimated or measured temperature of the first battery cell (11a) in relation to a preferred temperature range of the first battery cell (11a), determine whether or not to transmit a first wake up signal to a battery control module (20), which first wake up signal is arranged to indicate to the battery control module (20) to trigger a thermal management function for the battery arrangement (50),
wherein the processing circuitry (602) is further configured to determine whether or not to transmit the first wake up signal to the battery control module (20) based on at least one constraint limiting a number of wake up signals and/or a rate of wake up signals sent to the battery control module (20)

2. The computer system (600) of claim 1, wherein the processing circuitry (602) is further configured to determine to transmit the first wake up signal in response to that the estimated or measured temperature of the first battery cell (11a) is outside of the preferred temperature range.

3. The computer system (600) of claim 1 or 2, wherein the at least one constraint comprises a hysteresis for an end-point of the preferred temperature range, and wherein the processing circuit is configured to determine whether or not to transmit the first wake up signal based on whether the measured or estimated temperature triggers the hysteresis with respect to at least one previously measured or estimated temperature of the first battery cell (11a).

4. The computer system (600) of any of claims 1-3, wherein the at least one constraint comprises a constraint to only transmit a set number of wake up signals during a first time period, and optionally, wherein the first time period starts when transmitting a wake up signal to the battery control module (20).

5. The computer system (600) of any of claims 1-4, wherein the at least one constraint comprises a constraint to wait at least a second time period until transmitting a subsequent wake up signal.

6. The computer system (600) of any of claims 1-5, wherein the processing circuitry (602) is configured to obtain the first indication by being configured to:
obtain a temperature measurement or estimate from one or more second battery cells (11b, 11c), and
estimate the temperature of the first battery cell (11a) based on the temperature measurement or estimate from one or more second battery cells (11b, 11c) .

7. The computer system (600) of any of claims 1-6, wherein the processing circuitry (602) is further configured to:
transmit the first wake up signal, and thereby indicating to the battery control module (20) to trigger the thermal management function, and optionally wherein the thermal management function relates to initiating, adjusting, and/or maintaining a heating or cooling functionality for adjusting the temperature of the first battery cell (11a) to meet the preferred temperature range, and optionally wherein the processing circuitry (602) is further configured to:
subsequent to transmitting the first wake up signal to the battery control module (20), obtain, by the cell monitoring unit (30), a second indication indicative of a second estimated or measured temperature of the first battery cell (11a), and when the second estimated or measured temperature is outside of the preferred temperature range, determine whether or not to transmit a second wake up signal to the battery control module (20) based on at least one constraint limiting a number of wake up signals and/or a rate of wake up signals sent to the battery control module (20).

8. A vehicle (1) comprising a battery arrangement (50) comprising a first battery cell (11a) and a cell monitoring unit (30), and a battery control module (20), the cell monitoring unit (30) is configured to monitor the first battery cell (11a), the battery control module (20) is configured to trigger a thermal management function for the battery arrangement (50) when receiving a wake up signal, and wherein the vehicle (1) comprises the computer system (600) of any of claims 1-7.

9. A vehicle (1) of claim 8, wherein the vehicle is parked and is arranged in a low power mode.

10. A computer-implemented method for handling a battery arrangement (50) comprising a first battery cell (11a) and a cell monitoring unit (30), the cell monitoring unit (30) is configured to monitor the first battery cell (11a), the method comprising:
by processing circuitry (602) of a computer system (600), obtaining (201, 501) by the cell monitoring unit (30), a first indication indicative of an estimated or measured temperature of the first battery cell (11a),
by the processing circuitry (602), based on the estimated or measured temperature of the first battery cell (11a) in relation to a preferred temperature range, determining (202, 502) whether or not to transmit a first wake up signal to a battery control module (20), which first wake up signal is arranged to indicate to the battery control module (20) to trigger a thermal management function for the battery arrangement (50);
wherein determining whether or not to transmit the first wake up signal to the battery control module (20) is based on at least one constraint limiting a number of wake up signals and/or a rate of wake up signals sent to the battery control module (20) .

11. The method of claim 10, wherein determining (202) whether or not to transmit the first wake up signal is based on at least one constraint limiting a number of wake up signals and/or a rate of wake up signals sent to the battery control module (20).

12. The method of any of claims 10-11, wherein obtaining (201) the first indication comprises:
obtaining a temperature measurement or estimate from one or more second battery cells (11b, 11c), and
estimating the temperature of the first battery cell (11a) based on the temperature measurement or estimate from one or more second battery cells (11b, 11c),

13. A computer program product comprising program code for performing, when executed by the processing circuitry (602), the method of any of claims 10-12.

14. A non-transitory computer-readable storage medium comprising instructions, which when executed by the processing circuitry (602), cause the processing circuitry (602) to perform the method of any of claims 10-12.

## Patentansprüche

1. Computersystem (600), umfassend eine Verarbeitungsschaltung (602), die konfiguriert ist, um eine Batterieanordnung (50) zu handhaben, umfassend eine erste Batteriezelle (11a) und eine Zellenüberwachungseinheit (30), wobei die Zellenüberwachungseinheit (30) konfiguriert ist, um die erste Batteriezelle (11a) zu überwachen, wobei die Verarbeitungsschaltung (602) ferner konfiguriert ist zum:
Erhalten, durch die Zellenüberwachungseinheit (30), einer ersten Anzeige, die eine geschätzte oder gemessene Temperatur der ersten Batteriezelle (11a) anzeigt,
basierend auf der geschätzten oder gemessenen Temperatur der ersten Batteriezelle (11a) in Bezug auf einen bevorzugten Temperaturbereich der ersten Batteriezelle (11a), Bestimmen, ob ein erstes Wecksignal an ein Batteriesteuermodul (20) zu übertragen ist oder nicht, wobei das erste Wecksignal angeordnet ist, um dem Batteriesteuermodul (20) anzuzeigen, eine Wärmemanagementfunktion für die Batterieanordnung (50) auszulösen,
wobei die Verarbeitungsschaltung (602) ferner konfiguriert ist, um zu bestimmen, ob das erste Wecksignal an das Batteriesteuermodul (20) zu übertragen ist oder nicht, basierend auf mindestens einer Beschränkung, die eine Anzahl von Wecksignalen und/oder eine Rate von Wecksignalen begrenzt, die an das Batteriesteuermodul (20) gesendet werden

2. Computersystem (600) nach Anspruch 1, wobei die Verarbeitungsschaltung (602) ferner konfiguriert ist, um zu bestimmen, das erste Wecksignal als Reaktion darauf zu übertragen, dass die geschätzte oder gemessene Temperatur der ersten Batteriezelle (11a) außerhalb des bevorzugten Temperaturbereichs liegt.

3. Computersystem (600) nach Anspruch 1 oder 2, wobei die mindestens eine Beschränkung eine Hysterese für einen Endpunkt des bevorzugten Temperaturbereichs umfasst und wobei die Verarbeitungsschaltung konfiguriert ist, um zu bestimmen, ob das erste Wecksignal zu übertragen ist oder nicht, basierend darauf, ob die gemessene oder geschätzte Temperatur die Hysterese hinsichtlich mindestens einer zuvor gemessenen oder geschätzten Temperatur der ersten Batteriezelle (11a) auslöst.

4. Computersystem (600) nach einem der Ansprüche 1 bis 3, wobei die mindestens eine Beschränkung eine Beschränkung umfasst, nur eine festgelegte Anzahl von Wecksignalen während einer ersten Zeitspanne zu übertragen, und optional, wobei die erste Zeitspanne beginnt, wenn ein Wecksignal an das Batteriesteuermodul (20) übertragen wird.

5. Computersystem (600) nach einem der Ansprüche 1 bis 4, wobei die mindestens eine Beschränkung eine Beschränkung umfasst, mindestens eine zweite Zeitspanne zu warten, bis ein nachfolgendes Wecksignal übertragen wird.

6. Computersystem (600) nach einem der Ansprüche 1 bis 5, wobei die Verarbeitungsschaltung (602) konfiguriert ist, um die erste Anzeige zu erhalten, indem sie konfiguriert ist zum:
Erhalten einer Temperaturmessung oder -schätzung von einer oder mehreren zweiten Batteriezellen (11b, 11c) und
Schätzen der Temperatur der ersten Batteriezelle (11a) basierend auf der Temperaturmessung oder -schätzung von einer oder mehreren zweiten Batteriezellen (11b, 11c).

7. Computersystem (600) nach einem der Ansprüche 1 bis 6, wobei die Verarbeitungsschaltung (602) ferner konfiguriert ist zum:
Übertragen des ersten Wecksignals und dadurch Anzeigen an das Batteriesteuermodul (20), die Wärmemanagementfunktion auszulösen, und optional wobei sich die Wärmemanagementfunktion auf ein Initiieren, Anpassen und/oder Aufrechterhalten einer Heiz- oder Kühlfunktionalität zum Anpassen der Temperatur der ersten Batteriezelle (11a) bezieht, um den bevorzugten Temperaturbereich zu erfüllen, und optional wobei die Verarbeitungsschaltung (602) ferner konfiguriert ist zum:
nachfolgend zum Übertragen des ersten Wecksignals an das Batteriesteuermodul (20), Erhalten, durch die Zellenüberwachungseinheit (30), einer zweiten Anzeige, die eine zweite geschätzte oder gemessene Temperatur der ersten Batteriezelle (11a) anzeigt, und wenn die zweite geschätzte oder gemessene Temperatur außerhalb des bevorzugten Temperaturbereichs liegt, Bestimmen, ob ein zweites Wecksignal an das Batteriesteuermodul (20) zu übertragen ist oder nicht, basierend auf mindestens einer Beschränkung, die eine Anzahl von Wecksignalen und/oder eine Rate von Wecksignalen begrenzt, die an das Batteriesteuermodul (20) gesendet werden.

8. Fahrzeug (1), umfassend eine Batterieanordnung (50), umfassend eine erste Batteriezelle (11a) und eine Zellenüberwachungseinheit (30), und ein Batteriesteuermodul (20), wobei die Zellenüberwachungseinheit (30) konfiguriert ist, um die erste Batteriezelle (11a) zu überwachen, das Batteriesteuermodul (20) konfiguriert ist, um eine Wärmemanagementfunktion für die Batterieanordnung (50) auszulösen, wenn es ein Wecksignal empfängt, und wobei das Fahrzeug (1) das Computersystem (600) nach einem der Ansprüche 1 bis 7 umfasst.

9. Fahrzeug (1) nach Anspruch 8, wobei das Fahrzeug geparkt ist und in einem Niedrigleistungsmodus angeordnet ist.

10. Computerimplementiertes Verfahren zum Handhaben einer Batterieanordnung (50), umfassend eine erste Batteriezelle (11a) und eine Zellenüberwachungseinheit (30), wobei die Zellenüberwachungseinheit (30) konfiguriert ist, um die erste Batteriezelle (11a) zu überwachen, das Verfahren umfassend:
durch die Verarbeitungsschaltung (602) eines Computersystems (600), Erhalten (201, 501), durch die Zellenüberwachungseinheit (30), einer ersten Anzeige, die eine geschätzte oder gemessene Temperatur der ersten Batteriezelle (11a) anzeigt,
durch die Verarbeitungsschaltung (602), basierend auf der geschätzten oder gemessenen Temperatur der ersten Batteriezelle (11a) in Bezug auf einen bevorzugten Temperaturbereich, Bestimmen (202, 502), ob ein erstes Wecksignal an ein Batteriesteuermodul (20) zu übertragen ist oder nicht, wobei das erste Wecksignal angeordnet ist, um dem Batteriesteuermodul (20) anzuzeigen, eine Wärmemanagementfunktion für die Batterieanordnung (50) auszulösen;
wobei das Bestimmen, ob das erste Wecksignal an das Batteriesteuermodul (20) zu übertragen ist oder nicht, auf mindestens einer Beschränkung basiert, die eine Anzahl von Wecksignalen und/oder eine Rate von Wecksignalen begrenzt, die an das Batteriesteuermodul (20) gesendet werden.

11. Verfahren nach Anspruch 10, wobei das Bestimmen (202), ob das erste Wecksignal zu übertragen ist oder nicht, auf mindestens einer Beschränkung basiert, die eine Anzahl von Wecksignalen und/oder eine Rate von Wecksignalen begrenzt, die an das Batteriesteuermodul (20) gesendet werden.

12. Verfahren nach einem der Ansprüche 10 bis 11, wobei das Erhalten (201) der ersten Anzeige umfasst:
Erhalten einer Temperaturmessung oder -schätzung von einer oder mehreren zweiten Batteriezellen (11b, 11c) und
Schätzen der Temperatur der ersten Batteriezelle (11a) basierend auf der Temperaturmessung oder -schätzung von einer oder mehreren zweiten Batteriezellen (11b, 11c),

13. Computerprogrammprodukt, umfassend einen Programmcode zum Durchführen, wenn er durch die Verarbeitungsschaltung (602) ausgeführt wird, des Verfahrens nach einem der Ansprüche 10 bis 12.

14. Nichtflüchtiges, computerlesbares Speichermedium, umfassend Anweisungen, die, wenn sie durch die Verarbeitungsschaltung (602) ausgeführt werden, die Verarbeitungsschaltung (602) veranlassen, das Verfahren nach einem der Ansprüche 10 bis 12 durchzuführen.

## Revendications

1. Système informatique (600) comprenant un système de circuits de traitement (602) configuré pour prendre en charge un agencement de batterie (50) comprenant une première cellule de batterie (11a) et une unité de surveillance de cellule (30), l'unité de surveillance de cellule (30) est configurée pour surveiller la première cellule de batterie (11a), le système de circuits de traitement (602) est configuré en outre pour :
obtenir par l'unité de surveillance de cellule (30), une première indication indiquant une température estimée ou mesurée de la première cellule de batterie (11a),
en fonction de la température estimée ou mesurée de la première cellule de batterie (11a) par rapport à une plage de température préférée de la première cellule de batterie (11a), déterminer s'il faut ou non transmettre un premier signal de réveil à un module de commande de batterie (20), ce premier signal de réveil étant agencé pour indiquer au module de commande de batterie (20) de déclencher une fonction de régulation thermique pour l'agencement de batterie (50),
dans lequel le système de circuits de traitement (602) est configuré en outre pour déterminer s'il faut ou non transmettre le premier signal de réveil au module de commande de batterie (20) en fonction d'au moins une contrainte limitant un nombre de signaux de réveil et/ou un taux de signaux de réveil envoyés au module de commande de batterie (20)

2. Système informatique (600) selon la revendication 1, dans lequel le système de circuits de traitement (602) est configuré en outre pour déterminer de transmettre le premier signal de réveil en réponse au fait que la température estimée ou mesurée de la première cellule de batterie (11a) est à l'extérieur de la plage de température préférée.

3. Système informatique (600) selon la revendication 1 ou 2, dans lequel l'au moins une contrainte comprend une hystérésis pour un point de fin de la plage de température préférée, et dans lequel le circuit de traitement est configuré pour déterminer s'il faut ou non transmettre le premier signal de réveil en fonction du fait que la température mesurée ou estimée déclenche l'hystérésis par rapport à au moins une température précédemment mesurée ou estimée de la première cellule de batterie (11a).

4. Système informatique (600) selon l'une quelconque des revendications 1 à 3, dans lequel l'au moins une contrainte comprend une contrainte pour ne transmettre qu'un nombre défini de signaux de réveil pendant un premier laps de temps, et facultativement, dans lequel le premier laps de temps démarre lors de la transmission d'un signal de réveil au module de commande de batterie (20).

5. Système informatique (600) selon l'une quelconque des revendications 1 à 4, dans lequel l'au moins une contrainte comprend une contrainte pour attendre au moins un second laps de temps jusqu'à la transmission d'un signal de réveil ultérieur.

6. Système informatique (600) selon l'une quelconque des revendications 1 à 5, dans lequel le système de circuits de traitement (602) est configuré pour obtenir la première indication en étant configuré pour :
obtenir une mesure ou estimation de température auprès d'une ou plusieurs secondes cellules de batterie (11b, 11c), et
estimer la température de la première cellule de batterie (11a) en fonction de la mesure ou de l'estimation de température provenant d'une ou plusieurs secondes cellules de batterie (11b, 11c).

7. Système informatique (600) selon l'une quelconque des revendications 1 à 6, dans lequel le système de circuits de traitement (602) est configuré en outre pour :
transmettre le premier signal de réveil, et indiquer de ce fait au module de commande de batterie (20) de déclencher la fonction de régulation thermique, et facultativement dans lequel la fonction de régulation thermique se rapporte à l'initiation, l'ajustement et/ou le maintien d'une fonctionnalité de chauffage ou de refroidissement permettant d'ajuster la température de la première cellule de batterie (11a) pour respecter la plage de température préférée, et facultativement dans lequel le système de circuits de traitement (602) est configuré en outre pour :
à la suite de la transmission du premier signal de réveil au module de commande de batterie (20), obtenir, par l'unité de surveillance de cellule (30), une seconde indication indiquant une seconde température estimée ou mesurée de la première cellule de batterie (11a), et lorsque la seconde température estimée ou mesurée est à l'extérieur de la plage de température préférée, déterminer s'il faut ou non transmettre un second signal de réveil au module de commande de batterie (20) en fonction d'au moins une contrainte limitant un nombre de signaux de réveil et/ou un taux de signaux de réveil envoyés au module de commande de batterie (20).

8. Véhicule (1) comprenant un agencement de batterie (50) comprenant une première cellule de batterie (11a) et une unité de surveillance de cellule (30), et un module de commande de batterie (20), l'unité de surveillance de cellule (30) est configurée pour surveiller la première cellule de batterie (11a), le module de commande de batterie (20) est configuré pour déclencher une fonction de régulation thermique pour l'agencement de batterie (50) lors de la réception d'un signal de réveil, et dans lequel le véhicule (1) comprend le système informatique (600) selon l'une quelconque des revendications 1 à 7.

9. Véhicule (1) selon la revendication 8, dans lequel le véhicule est stationné et est agencé dans un mode de faible puissance.

10. Procédé implémenté par ordinateur pour la prise en charge d'un agencement de batterie (50) comprenant une première cellule de batterie (11a) et une unité de surveillance de cellule (30), l'unité de surveillance de cellule (30) est configurée pour surveiller la première cellule de batterie (11a), le procédé comprenant :
par un système de circuits de traitement (602) d'un système informatique (600), l'obtention (201, 501) par l'unité de surveillance de cellule (30), d'une première indication indiquant une température estimée ou mesurée de la première cellule de batterie (11a),
par le système de circuits de traitement (602), en fonction de la température estimée ou mesurée de la première cellule de batterie (11a) par rapport à une plage de température préférée, le fait de déterminer (202, 502) s'il faut ou non transmettre un premier signal de réveil à un module de commande de batterie (20), ce premier signal de réveil étant agencé pour indiquer au module de commande de batterie (20) de déclencher une fonction de régulation thermique pour l'agencement de batterie (50) ;
dans lequel le fait de déterminer s'il faut ou non transmettre le premier signal de réveil au module de commande de batterie (20) en fonction d'au moins une contrainte limitant un nombre de signaux de réveil et/ou un taux de signaux de réveil envoyés au module de commande de batterie (20).

11. Procédé selon la revendication 10, dans lequel le fait de déterminer (202) s'il faut ou non transmettre le premier signal de réveil est en fonction d'au moins une contrainte limitant un nombre de signaux de réveil et/ou un taux de signaux de réveil envoyés au module de commande de batterie (20).

12. Procédé selon l'une quelconque des revendications 10 à 11, dans lequel l'obtention (201) de la première indication comprend :
l'obtention d'une mesure ou d'une estimation de température auprès d'une ou plusieurs secondes cellules de batterie (11b, 11c), et
l'estimation de la température de la première cellule de batterie (11a) en fonction de la mesure ou de l'estimation de température provenant d'une ou plusieurs secondes cellules de batterie (11b, 11c),

13. Produit programme informatique comprenant un code de programme permettant de mettre en œuvre, lorsqu'il est exécuté par le système de circuits de traitement (602), le procédé selon l'une quelconque des revendications 10 à 12.

14. Support de stockage non transitoire lisible par ordinateur comprenant des instructions, qui lorsqu'elles sont exécutées par le système de circuits de traitement (602), amènent le système de circuits de traitement (602) à mettre en œuvre le procédé selon l'une quelconque des revendications 10 à 12.
